# EUROPÄISCHE PATENTANMELDUNG

(11) **EP 4 340 540 A1**
(43) Veröffentlichungstag der Anmeldung: **20.03.2024**
(21) Anmeldenummer: 22195281.5
(22) Anmeldetag: 13.09.2022
(51) Int. Cl.: H05B 3/84, C03C 17/34, B32B 17/10

(54) **VERFAHREN ZUM HERSTELLEN EINER FAHRZEUGSCHEIBE MIT ELEKTRISCH LEITFÄHIGER SPRÜHSCHICHT**

(71) Anmelder: Saint-Gobain Glass France, 92400 Courbevoie (FR)
(72) Erfinder: HAGEN, Jan, 52134 Herzogenrath (DE); GOMER, Andreas, 52134 Herzogenrath (DE)
(74) Vertreter: SGR Germany-Patents

(57) **Zusammenfassung**

Verfahren zur Herstellung einer Fahrzeugscheibe (10) mindestens umfassend in dieser Reihenfolge die Schritte
a) Bereitstellen eines flächigen Substrates (1) mit einer ersten Oberfläche (A) und einer zweiten Oberfläche (B),
b) Biegen des flächigen Substrats (1) bei Temperaturen oberhalb von 400 °C und anschließendes Abkühlen des flächigen Substrats (1) auf eine Temperatur von unter 100 °C,
c) Abscheidung wenigstens einer elektrisch leitfähigen Sprühschicht (2) umfassend ein Metall und/oder eine Metalllegierung mittels Kaltgasspritzen in mindestens einem Teilbereich der ersten Oberfläche (A) und/oder der zweiten Oberfläche (B) des Substrats (1),
d) Aufbringen mindestens eines elektrischen Anschlusselementes (3) auf der Sprühschicht (2) und elektrisch leitfähiges Verbinden des elektrischen Anschlusselementes (3) mit der Sprühschicht (2).

## Beschreibung

Die Erfindung betrifft ein Verfahren zur Herstellung einer Fahrzeugscheibe mit elektrisch leitfähiger Sprühschicht.

Moderne Kraftfahrzeuge werden mit immer mehr Technologie ausgestattet. Dies gilt auch für Kraftfahrzeugverglasungen, in die häufig Elemente wie Antennen, Bedienelemente, Funktionselemente mit elektrisch schaltbaren optischen Eigenschaften und/oder Heizungen integriert werden. All diese Elemente sind elektrische Verbraucher, deren Spannungsversorgung in der Scheibe sichergestellt werden muss, beispielsweise durch in eine Verbundscheibe eingelegte oder auf der Oberfläche einer Einzelscheibe aufgebrachte elektrische Sammelleiter.

Um eine Heizfunktion in einer Fahrzeugscheibe zu integrieren können in regelmäßigen Abständen elektrische Leiter, wie Heizdrähte, auf der Scheibe aufgebracht oder auch infrarotreflektierende elektrisch leitfähige Beschichtungen eingesetzt werden. Derartige Beschichtungen verfügen einerseits über eine gute elektrische Leitfähigkeit, die eine Beheizung der Scheibe ermöglicht und darüber hinaus über infrarotreflektierende Eigenschaften, die eine unerwünschte Erwärmung des Innenraums durch Sonneneinstrahlung vermindern. Diese Schichtsysteme sind somit nicht nur hinsichtlich sicherheitsrelevanter Aspekte, wie einer uneingeschränkten Sicht, sondern auch unter ökologischen Gesichtspunkten, wie einer Reduzierung des Schadstoffausstoßes, und einer Verbesserung des Fahrzeugkomforts von besonderer Bedeutung. Diverse Beispiele für solche funktionellen Beschichtungen sind beispielsweise IR-reflektierende Beschichtungen oder beheizbare Beschichtungen. Wärmestrahlung reflektierende Beschichtungen sind beispielsweise aus EP 2 141 135 A1, WO 2010115558 A1 und WO 2011105991 A1 bekannt, beheizbare Beschichtungen beispielsweise aus WO 03/024155 A2, US 2007/0082219 A1 und US 2007/0020465 A1. Auf dem Gebiet der heizbaren Beschichtungen haben darüber hinaus weitere Verbesserungen stattgefunden, die eine Reduzierung des Flächenwiderstands bewirken und so eine höhere Heizleistung der Scheibe ermöglichen. WO 2013/104439 und WO 2013/104438 offenbaren elektrisch leitfähige Beschichtungen umfassend einen Schichtstapel mit mindestens zwei leitfähigen Schichten sowie mehreren dielektrischen Schichten. Diese Beschichtungen verfügen über sehr niedrige Schichtwiderstände und sind somit auch zur Beheizung großflächiger Scheiben sehr gut geeignet.

Die zur elektrischen Kontaktierung der elektrischen Verbraucher benötigten elektrischen Leiter und/oder Anschlüsse werden bei Verbundscheiben in der Regel in diese einlaminiert. Die Laminierung solcher Elemente lässt sich nur schwer automatisieren, wodurch die Produktionskosten vergleichsweise hoch sind. Sammelschienen werden üblicherweise in Form von Silberpasten aufgetragen und mittels Wärmebehandlung bei Temperaturen oberhalb der Glasübergangstemperatur ausgehärtet. Die damit einhergehende Erwärmung des darunterliegenden Glassubstrats kann sich nachteilig auf die Spannungsverteilung auswirken und gegebenenfalls sogar zu Glasbruch führen.

Demnach besteht ein Bedarf an einem Verfahren zur Herstellung von Fahrzeugscheiben, in dem eine elektrisch leitfähige Strukturen aufgebracht werden kann ohne die Scheibe über die Glasübergangstemperatur zu erwärmen und die einen hohen Automatisierungsgrad aufweisen.

Der vorliegenden Erfindung liegt die Aufgabe zugrunde, ein solches verbessertes Verfahren bereitzustellen.

Diese Aufgabe wird erfindungsgemäß durch eine Fahrzeugscheibe gemäß Anspruch 1, gelöst. Bevorzugte Ausführungsformen gehen aus den Unteransprüchen hervor.

Das erfindungsgemäße Verfahren zur Herstellung einer Fahrzeugscheibe umfasst in dieser Reihenfolge mindestens die Schritte
a) Bereitstellen eines flächigen Substrates aus Glas mit einer ersten Oberfläche und einer zweiten Oberfläche,
b) Biegen des flächigen Substrats bei Temperaturen oberhalb von 400 °C und anschließendes Abkühlen des flächigen Substrats auf eine Temperatur von unter 100 °C,
c) Abscheidung wenigstens einer elektrisch leitfähigen Sprühschicht umfassend ein Metall und/oder eine Metalllegierung mittels Kaltgasspritzen in mindestens einem Teilbereich der ersten Oberfläche und/oder der zweiten Oberfläche des Substrats,
d) Aufbringen mindestens eines elektrischen Anschlusselementes auf der Sprühschicht und elektrisch leitfähiges Verbinden des elektrischen Anschlusselementes mit der Sprühschicht.

In einem ersten Schritt (Schritt a) wird ein flächiges Glassubstrat bereitgestellt. Das flächige Substrat verfügt über zwei einander gegenüberliegende Hauptflächen, die als erste Oberfläche und zweite Oberfläche bezeichnet werden. Das Substrat wird in einem zweiten Schritt (Schritt b) unter Erwärmung auf eine Temperatur von oberhalb 400 °C gebogen. Verfahren zum Biegen von Glassubstraten sind dem Fachmann hinlänglich bekannt. Typische Temperaturen für Glasbiegeprozesse betragen über 400°C und liegen beispielsweise bei 500°C bis 700°C, insbesondere oberhalb 600 °C. In einem dritten Schritt (Schritt d) wird mittels Kaltgasspritzen mindestens eine elektrisch leitfähige Sprühschicht auf der ersten Oberfläche und/oder der zweiten Oberfläche aufgetragen. Erfolgt die Abscheidung auf der ersten Oberfläche und der zweiten Oberfläche, so werden diese Oberflächen nacheinander mittels Kaltgasspritzen beschichtet. Auf die elektrisch leitfähige Sprühschicht wird anschließend ein elektrisches Anschlusselement elektrisch leitend aufgebracht, so dass die elektrisch leitfähige Sprühschicht über das Anschlusselement mit einer Spannungsquelle elektrisch leitend kontaktiert werden kann.

Im erfindungsgemäßen Verfahren werden elektrische Leiterbahnen in Form der elektrisch leitfähigen Sprühschicht auf dem Substrat angebracht, wobei das geometrische Design der Leiterbahnen frei gewählt werden kann. Das Kaltgassprühverfahren ermöglicht dabei eine hohe Freiheit in der geometrischen Gestaltung der Kaltsprühschicht bei gleichzeitig hoher Präzision. Dabei ist über eine Variation der Geometrie, Breite und Dicke der Schicht der gewünschte elektrische Widerstand einstellbar. Mit der gleichen Anlage sind demnach eine Vielzahl verschiedener Elemente wie Sammelleiter aufzubringen. Somit können elektrische Sammelleiter oder Heizdrähte, die häufig als Silberdruck aufgebracht oder im Laminat einer Verbundscheibe eingebracht werden, auf einfache Art und Weise unmittelbar auf dem bereits gebogenen Glassubstrat aufgetragen werden ohne dass ein Einbrennen eines Silberdrucks oder ein oft komplexes Einlegen von Elementen im Laminat notwendig ist. Bei laminierten Verbundscheiben kann auf diese Weise die Laminierleistung erhöht werden. Kaltgassprühverfahren sind darüber hinaus in hohem Maße automatisierbar durch Verwendung robotergestützter Anlagetechnik.

Im Vergleich zu anderen thermischen Spritzverfahren bietet Kaltgassprühen (auch als Kaltgasspritzen bezeichnet) den Vorteil, dass der Werkstoff während des Prozesses nicht geschmolzen wird. Dadurch entfallen thermische Einflüsse auf das Beschichtungsmaterial selbst sowie auf das Substratmaterial fast vollständig. Beim Kaltgassprühen treffen die Werkstoffpartikel mit einer hohen kinetischen Energie auf das Substrat, wodurch eine gute Anbindung der Partikel erfolgt und die aufgetragenen Werkstoffschichten eine hohe Homogenität und Dichte aufweisen.

Verfahren zum Kaltgassprühen sind dem Fachmann bekannt und die entsprechenden Anlagen sind kommerziell erhältlich. Unter anderem sind Kaltgassprühverfahren beschrieben in DE 19747386 A1 und DE 10037212 A1. Im Kaltgasspritzverfahren wird ein Prozessgas, vorzugsweise Stickstoff oder Helium, mit einem Druck von bis zu 50 bar in eine Spritzpistole eingeleitet und im Pistolengehäuse auf Temperatur von bis zu 1100 °C erhitzt. Die nachfolgende Entspannung des erhitzten und unter hohem Druck stehenden Gases in einer Düse führt zur Beschleunigung des Prozessgases auf Überschallgeschwindigkeit und zur gleichzeitigen Abkühlung des Gases auf eine Temperatur von unter 100 °C. Die im Kaltgasspritzverfahren aufzutragenden Werkstoffe werden in Pulver in der Düse eingespritzt und im Gasstrom beschleunigt. Die beschleunigten Werkstoffpartikel treffen auf die Substratoberfläche und werden dabei verformt. Im Gegensatz zu anderen Verfahren wie dem Flammspritzen ist das Kaltgasspritzen ein Verfahren mit relativ niedrigen Temperaturen und eignet sich daher für die Beschichtung temperaturempfindlicher Substrate wie Floatglas, aus dem Fahrzeugscheiben in der Regel hergestellt werden. Eine ausführliche Beschreibung der Methodik des Kaltgasspritzens ist dem Übersichtsartikel von Moridi et. al. in Surface Engineering, 2014, Vol. 36, No. 6, 369-395 zu entnehmen.

In einer bevorzugten Ausführungsform des erfindungsgemäßen Verfahrens enthält die elektrisch leitfähige Sprühschicht Magnesium, Aluminium, Titan, Nickel, Kupfer, Tantal, Niob, Silber, Gold, Eisen, Platin, Zirkonium, Molybdän, Chrom, Zinn, Zink und/oder Legierungen oder Gemische davon. Diese Materialien sind gut geeignet hinsichtlich einer Abscheidung mittels Kaltgassprühen und weisen eine ausreichende elektrische Leitfähigkeit auf. Besonders bevorzugt umfasst die elektrisch leitfähige Sprühschicht Aluminium, Zinn, Kupfer, Silber und/oder Legierungen oder Gemische davon, insbesondere Silber. Diese Materialien sind aufgrund ihrer hohen elektrischen Leitfähigkeit besonders geeignet.

Die elektrisch leitfähige Sprühschicht wird bevorzugt in einer Dicke von 10 µm bis 200 µm, besonders bevorzugt 50 µm bis 150 µm, abgeschieden. Elektrisch leitfähige Sprühschichten dieser Dicke weisen eine besonders gute Stromtragfähigkeit auf.

Die elektrisch leitfähige Sprühschicht wird bevorzugt mit einer Linienbreite von 0,5 mm bis 100 mm, bevorzugt 1 mm bis 50 mm, aufgetragen. Die hohe Präzision des Kaltsprühverfahrens ermöglicht die Abscheidung auch in geringen Linienbreiten.

Während des Kaltgassprühens wird das Substrat in Schritt c) bevorzugt auf eine Halterung aufgelegt. Unter dem Druck des auftreffenden Gases besteht die Möglichkeit, dass das zu beschichtende Substrat in seiner Position verschoben wird. Eine Halterung, die das Substrat in seiner Position fixiert, verhindert dies. Je nach Position der aufzubringenden Sprühschicht auf dem Substrat und je nach Biegung des Substrats kann auf die Halterung verzichtet werden. Insbesondere bei sehr dünnen Substraten kann die Halterung zumindest in dem Bereich, in dem die Sprühschicht aufgetragen wird, vollflächig ausgeführt werden um mechanische Beschädigungen des Substrats durch das mit hohem Druck auftreffende Kaltgas zu vermeiden.

In einer möglichen Ausführungsform des Verfahrens werden in Schritt c) Maskierungsstreifen verwendet, die Bereiche des Substrats abdecken, in denen keine Sprühschicht aufgetragen werden soll. Auf diese Weise wird eine Sprühschicht erzielt, die über ihre gesamte Breite eine konstante Schichtdicke aufweist. Dies ist insbesondere sinnvoll, wenn sich die Sprühschicht im späteren Durchsichtbereich des Substrats befindet. Die Maskierungsstreifen werden nach Aufbringen der Sprühschicht wieder entfernt.

Das Substrat wird in Schritt a) bevorzugt mit einer elektrisch leitfähigen Beschichtung auf der ersten Oberfläche und/oder auf der zweiten Oberfläche bereitgestellt und die elektrisch leitfähige Sprühschicht wird in Schritt c) auf der dem Substrat abgewandten Oberfläche der elektrisch leitfähigen Beschichtung abgeschieden. Mittels Kaltgassprühen kann die elektrisch leitfähige Sprühschicht elektrisch leitend auf der elektrisch leitfähigen Beschichtung abgeschieden werden, so dass die elektrisch leitfähige Sprühschicht als Sammelleiter dient, über die die elektrisch leitfähige Beschichtung an eine Spannungsquelle angeschlossen werden kann. Wird die elektrisch leitfähige Sprühschicht direkt auf die elektrisch leitfähige Beschichtung aufgesprüht, so ist besonders gute Adhäsion der Sprühschicht an der leitfähigen Beschichtung erzielbar. Wie dem Fachmann sich bekannt ist, weist die elektrisch leitfähige Beschichtung aufgrund der glatten Oberfläche des darunterliegenden Substrats eine gleichermaßen glatte Oberfläche auf. Wenn die Sprühschicht auf die elektrisch leitfähige Beschichtung aufgebracht wird, kann zwischen der rauheren Sprühschicht und der im Vergleich glatteren elektrisch leitfähigen Beschichtung eine mechanisch stabile Verbindung erreicht werden.

Elektrisch leitfähige Beschichtungen für Fahrzeugscheiben sind dem Fachmann wohlbekannt. Diese umfassen beispielsweise Schichten transparenter leitfähiger Oxide (auch als TCO oder transparent conductive oxide bezeichnet) und/oder metallhaltige Schichten. Bevorzugt werden elektrisch leitfähige Beschichtungen eingesetzt, deren Schichten gleichzeitig als Sonnenschutzbeschichtung fungieren. Solche Sonnenschutzbeschichtungen reflektieren Anteile der einfallenden Sonnenstrahlung außerhalb des sichtbaren Spektralbereichs, insbesondere im infraroten Spektralbereich. Dadurch wird die Aufheizung des Fahrzeuginnenraums durch direkte Sonneneinstrahlung verringert. Die elektrisch leitfähige Beschichtung ist bevorzugt als Sonnenschutzbeschichtung umfassend mindestens eine funktionelle Schicht auf Basis von Silber ausgeführt. In einer vorteilhaften Ausgestaltung umfasst die elektrisch leitfähige Beschichtung mehrere, bevorzugt zwei oder drei funktionelle Schichten auf Basis von Silber. Zwischen benachbarten funktionellen Schichten auf Basis von Silber sind vorzugsweise dielektrische Schichten angeordnet. Sonnenschutzbeschichtungen mit mehreren funktionellen Schichten ermöglichen eine hohe Reflektivität für Infrarotstrahlung bei gleichzeitig hoher Transmission im sichtbaren Spektralbereich.

Die Dicke jeder funktionellen Schicht der Sonnenschutzbeschichtung beträgt bevorzugt von 5 nm bis 25 nm, besonders bevorzugt von 10 nm bis 20 nm. Die Gesamtschichtdicke aller funktionellen Schichten der Sonnenschutzbeschichtung beträgt bevorzugt von 20 nm bis 80 nm, besonders bevorzugt von 30 nm bis 60 nm. In diesen Bereichen für die Dicke der funktionellen Schicht und die Gesamtdicke aller funktionellen Schichten werden besonders gute Ergebnisse hinsichtlich der Sonnenschutzfunktion und der Transparenz erreicht. Die Sonnenschutzbeschichtung umfasst bevorzugt zumindest eine dielektrische Schicht. Jede funktionelle Schicht ist besonders bevorzugt zwischen zwei dielektrischen Schichten angeordnet. Die funktionellen Schichten und die dielektrischen Schichten sind dabei bevorzugt so angeordnet, dass zwischen jeweils zwei benachbarten funktionellen Schichten, zwischen denen keine weitere funktionelle Schicht angeordnet ist, zumindest eine dielektrische Schicht angeordnet ist und dass oberhalb der obersten funktionellen Schicht zumindest eine weitere dielektrische Schicht angeordnet ist und dass unterhalb der untersten funktionellen Schicht zumindest eine weitere dielektrische Schicht angeordnet ist. Die dielektrischen Schichten der Sonnenschutzbeschichtung enthalten bevorzugt zumindest Siliziumnitrid. Das Siliziumnitrid kann Dotierungen aufweisen, insbesondere Aluminium. Die dielektrischen Schichten weisen bevorzugt Dicken auf von 10 nm bis 100 nm, besonders bevorzugt von 20 nm bis 70 nm. Die dielektrischen Schichten der Sonnenschutzbeschichtung können aber auch andere geeignete, dem Fachmann bekannte Materialien enthalten, beispielsweise zumindest ein Metalloxid wie SnO₂, Bi₂O₃, TiO₂, ZnO und/oder zumindest ein Metallnitrid wie AIN. Die Sonnenschutzbeschichtung kann weitere Schichten umfassen, die dem Fachmann an sich bekannt sind, beispielsweise Glättungsschichten und/oder Blockerschichten.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Flächig übereinander angeordnet bedeutet, dass die Projektion einer ersten Schicht in die Ebene einer zweiten Schicht zumindest teilweise deckungsgleich mit der zweiten Schicht ist.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen. Die Schicht auf Basis von Silber besteht somit mehrheitlich aus Silber, bevorzugt zu über 80%, besonders bevorzugt zu über 90%, aus Silber.

Die elektrisch leitfähige Beschichtung weist vorzugsweise eine elektrische Leitfähigkeit von mindestens 10⁻⁷ S/cm auf.

Die elektrisch leitfähige Beschichtung wird mittels dem Fachmann bekannten Methoden abgeschieden, beispielsweise durch physikalische oder chemische Gasphasenabscheidung, also ein PVD- oder CVD-Verfahren (PVD: *physical vapour deposition,* CVD: *chemical vapour deposition*)*,* Atmosphärenplasma oder Kaltgasspritzen aufgebracht werden. Bevorzugt ist die elektrisch leitfähige Beschichtung eine durch Kathodenzerstäubung aufgebrachte ("aufgesputterte") Beschichtung, insbesondere eine durch magnetfeldunterstütze Kathodenzerstäubung aufgebrachte ("magnetron-aufgesputterte") Beschichtung.

Insbesondere bei elektrisch leitfähigen Beschichtungen umfassend ein Mehrschichtsystem, wie beispielsweise den beschriebenen beheizbaren Sonnenschutzbeschichtungen, ist ein sehr starker mechanischer Halt zwischen Sprühschicht und elektrisch leitfähiger Beschichtung zu beobachten. Eine im Kaltspritzverfahren aufgebrachte Sprühschicht weist eine mechanische Anbindung an alle Schichten des Schichtenstapels auf, die mit alternativen Auftragsverfahren so nicht erreicht werden kann. In entsprechender Weise ist die Sprühschicht an alle Schichten des Mehrschichtsystems auch elektrisch angebunden, wohingegen dies mit alternativen Auftragsverfahren nicht erreichbar ist.

Die elektrisch leitfähige Sprühschicht weist bevorzugt eine elektrische Leitfähigkeit von mindestens 10⁻⁷ S/cm auf.

Das Substrat kann zusätzlich oder alternativ zu der optional vorhandenen elektrisch leitfähigen Beschichtung, weitere an sich bekannte Beschichtungen aufweisen, beispielsweise Antireflexbeschichtungen, Antihaftbeschichtungen, Antikratzbeschichtungen, photokatalytische Beschichtungen, Reflexionsbeschichtungen und/oder Wärmeschutzbeschichtungen (auch als Low-E-Beschichtungen bekannt). Diese Beschichtungen können auf der gleichen Substratoberfläche wie die elektrisch leitfähige Beschichtung oberhalb oder unterhalb der elektrisch leitfähigen Beschichtung angebracht und/oder auch auf der anderen Scheibenoberfläche des Substrats vorgesehen werden.

In Schritt d) des erfindungsgemäßen Verfahrens wird ein elektrisches Anschlusselement auf der Sprühschicht aufgebracht und mit dieser elektrisch leitend verbunden. Elektrische Anschlusselemente sind dem Fachmann bekannt und kommerziell erhältlich. Das Anschlusselement dient der elektrischen Verbindung der elektrisch leitfähigen Sprühschicht und sofern vorhanden der elektrisch leitfähigen Beschichtung mit einer elektrischen Komponente, beispielsweise einer elektronischen Schaltung zur Verarbeitung von Antennensignalen oder dem Pol einer Spannungsquelle.

Das Anschlusselement umfasst elektrisch leitfähige Metalle und/oder Legierungen, beispielsweise Kupfer, Bronze, Messing, Stahl und/oder Titan.

Verfahren zum Aufbringen und elektrischen Anbinden des Anschlusselementes an der Sprühschicht sind dem Fachmann bekannt. Vorzugsweise wird das mindestens eine Anschlusselement mittels eines Verfahrens aufgebracht, das gleichzeitig die mechanische und die elektrische Anbindung an die Sprühschicht bewirkt. Insbesondere wird das Anschlusselement mittels eines elektrisch leitfähigen Klebstoffs aufgeklebt oder auf die Sprühschicht aufgelötet. Löten hat sich dabei in Bezug auf die Haltbarkeit der Anbindung und die Stromtragfähigkeit als besonders vorteilhaft erwiesen, wobei unter ökologischen Gesichtspunkten bleifreie Lotmassen verwendet werden. Bleifreie Lotmassen und dazu passende Anschlusselemente für die Verarbeitung auf Glassubstraten sind aus der Literatur bekannt und insbesondere mit Inkrafttreten der EU-Verordnungen zur Verwendung bleifreier Lotmassen ein gängiger Standard.

Die im erfindungsgemäßen Verfahren hergestellte Fahrzeugscheibe ist zur Abtrennung eines Fahrzeuginnenraums von einer äußeren Umgebung vorgesehen. Die Fahrzeugscheibe ist also eine Fensterscheibe, die in eine Fensteröffnung der Fahrzeugkarosserie eingesetzt ist oder dafür vorgesehen ist.

In einer ersten bevorzugten Ausführungsform des erfindungsgemäßen Verfahrens wird das Substrat nicht mit weiteren Substraten oder Scheiben laminiert, sondern verbleibt als Einzelscheibe. Die resultierende Fahrzeugscheibe wird beispielsweise als Heckscheibe oder Seitenscheibe eingesetzt, wobei die Sprühschicht an der zweiten Oberfläche des Substrats angeordnet ist und die zweite Oberfläche die innenraumseitige Oberfläche der Fahrzeugscheibe darstellt.

Ist die Fahrzeugscheibe eine Verbundscheibe, so ist das Substrat mit einer zweiten Scheibe zu einer Verbundscheibe laminiert. Eine Scheibe der Fahrzeugverbundscheibe stellt dabei die Außenscheibe der Fahrzeugverbundscheibe dar, die der äußeren Fahrzeugumgebung zugewandt ist, während die andere Scheibe der Fahrzeugverbundscheibe die Innenscheibe bildet, die zum Fahrzeuginnenraum orientiert ist. Es versteht sich, dass die Scheibe, die andere Scheibe und die thermoplastische Zwischenschicht im Wesentlichen die gleichen äußeren Abmessungen haben. Diejenige Oberfläche der jeweiligen Scheibe, welche in Einbaulage der äußeren Umgebung des Fahrzeugs zugewandt ist, wird als außenseitige Oberfläche bezeichnet. Diejenige Oberfläche der jeweiligen Scheibe, welche in Einbaulage dem Innenraum des Fahrzeugs zugewandt ist, wird als innenraumseitige Oberfläche bezeichnet. Die innenraumseitige Oberfläche der Außenscheibe ist über die thermoplastische Zwischenschicht mit der außenseitigen Oberfläche der Innenscheibe verbunden. Üblicherweise wird die außenseitige Oberfläche der Außenscheibe als "Seite I" bezeichnet, die innenraumseitige Oberfläche der Außenscheibe als "Seite II", die außenseitige Oberfläche der Innenscheibe als "Seite III" und die innenraumseitige Oberfläche der Innenscheibe als "Seite IV".

In einer zweiten bevorzugten Ausführungsform des erfindungsgemäßen Verfahrens wird das Substrat nach Schritt c) und vor oder nach Schritt d) unter Zwischenlage einer thermoplastischen Zwischenschicht zu einer Verbundscheibe laminiert. Das Substrat kann nach Lamination die Innenscheibe oder die Außenscheibe der Fahrzeugscheibe darstellen.

Die Laminierung des Substrats, der zweiten Scheibe und der thermoplastischen Zwischenschicht erfolgt unter Einwirkung von Hitze, Vakuum und/oder Druck, wobei die einzelnen Schichten durch mindestens eine thermoplastische Zwischenschicht miteinander verbunden (laminiert) werden. Es können an sich bekannte Verfahren zur Herstellung einer Verbundscheibe verwendet werden. Es können beispielsweise sogenannte AutoklavVerfahren bei einem erhöhten Druck von etwa 10 bar bis 15 bar und Temperaturen von 130 °C bis 145 °C über etwa 2 Stunden durchgeführt werden. An sich bekannte Vakuumsackoder Vakuumringverfahren arbeiten beispielsweise bei etwa 200 mbar und 130 °C bis 145 °C. Die Außenscheibe, die Innenscheibe und die thermoplastische Zwischenschicht können auch in einem Kalander zwischen mindestens einem Walzenpaar zu einer Verbundscheibe verpresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Außenscheibe und die Innenscheibe innerhalb von beispielsweise etwa 60 Minuten bei verminderten Drücken von 0,01 mbar bis 800 mbar und Temperaturen von 80°C bis 170°C laminiert werden können.

Ist das Substrat als Außenscheibe der Fahrzeugverbundscheibe angeordnet, so ist die Sprühschicht auf der zweiten Oberfläche des Substrats angeordnet und die zweite Oberfläche stellt die innenraumseitige Oberfläche der Außenscheibe dar. Die Sprühschicht befindet sich demnach an der der thermoplastischen Zwischenschicht zugewandten Oberfläche der Außenscheibe. In diesem Fall erfolgt die Lamination der Fahrzeugscheibe nach dem Anbringen des Anschlusselementes in Schritt d).

Stellt das Substrat die Innenscheibe der Fahrzeugscheibe dar, so ist die Sprühschicht auf der ersten Oberfläche des Substrats oder auf der zweiten Oberfläche des Substrats angeordnet, wobei die erste Oberfläche die außenseitige Oberfläche der Innenscheibe und die zweite Oberfläche die innenraumseitige Oberfläche der Innenscheibe darstellt. Ist die Sprühschicht auf der außenseitigen Oberfläche der Innenscheibe angeordnet, so ist diese der thermoplastischen Zwischenschicht zugewandt und die Lamination findet nach Schritt d) statt. Sofern die Sprühschicht auf der innenraumseitigen Oberfläche der Innenscheibe angeordnet ist, kann die Lamination vor oder nach Schritt d) erfolgen, bevorzugt vor Schritt d).

Wird im erfindungsgemäßen Verfahren eine Verbundscheibe hergestellt, so wird die zweite Scheibe bevorzugt gemeinsam mit dem Substrat in Schritt b) gebogen. Somit werden die Außenscheibe und die Innenscheibe der Fahrzeugverbundscheibe gemeinsam (d.h. zeitgleich und durch dasselbe Werkzeug) kongruent gebogen, weil dadurch die Form der Scheiben für die später erfolgende Laminierung optimal aufeinander abgestimmt ist.

Die Fahrzeugscheibe umfassend ein Substrat und eine zweite Scheibe, die miteinander zu einer Verbundscheibe laminiert sind, ist vorzugsweise eine Windschutzscheibe. Die optional vorhandene elektrisch leitfähige Beschichtung liegt dabei im Durchsichtbereich der Verbundscheibe. Die Gesamttransmission durch die Verbundscheibe beträgt in einer Ausgestaltung als Windschutzscheibe eines Kraftfahrzeugs mindestens 70%, bezogen auf die Lichtart A. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

In einer bevorzugten Ausführungsform des erfindungsgemäßen Verfahrens wird vor Schritt c), vorzugsweise vor Schritt b), zumindest in einem umlaufenden Randbereich des Substrats ein opaker Abdeckdruck unmittelbar auf dem Substrat aufgetragen. Dadurch sind weitere auf die Fahrzeugscheibe aufgetragenen Schichten im Randbereich durch die opake Abdeckschicht kaschiert. Wird die Sprühschicht in Schritt c) innerhalb des Randbereichs abgeschieden, so befindet sich diese auf dem opaken Abdeckdruck. Sofern eine elektrisch leitfähige Beschichtung auf dem Substrat aufgebracht werden soll, so erfolgt dies bevorzugt nach Auftrag des Abdeckdrucks, so dass die elektrisch leitfähige Beschichtung auch im Randbereich durch den Abdeckdruck kaschiert wird.

Kraftfahrzeugscheiben umfassen häufig einen opaken Abdeckdruck, auch als Schwarzdruck oder schwarze Emaille bezeichnet, um bestimmte Bereiche der Verglasung zu verdecken, zum Beispiel den Bereich, in dem die Scheibe mit der Karosserie verklebt ist, oder Bereiche in denen elektrische Anschlüsse platziert werden. Über eine optische Kaschierung hinausgehend soll der opake Abdeckdruck die Verklebung vor Einwirkung von UV-Licht schützen, um eine Zersetzung des Klebstoffs zu vermeiden. Ein standardmäßig verwendeter opaker Abdeckdruck ist eine schwarze Emaille, die als eine Art keramischer Verbundstoff aus Glasfritten mit weiteren Elementen zusammengesetzt ist. Emaillen umfassend diese Bestandteile sind bekannt und werden beispielsweise durch Einbrennen von Druckpasten auf Glasoberflächen erzeugt. Geeignete Druckpasten für Automobilverglasungen und Gebäudeverglasungen sind kommerziell erhältlich.

Der opake Abdeckdruck kann an die Abmessungen der Fahrzeugscheibe angepasst werden. Der opake Abdeckdruck ist bevorzugt im Randbereich der Fahrzeugscheibe umlaufend entlang der umlaufenden Kante der Scheibe ausgebildet, wobei die Breite des Abdeckdrucks variiert.

Die opake Abdeckschicht dient vorzugsweise der Maskierung einer Verklebung der Fahrzeugscheibe, beispielsweise als Heckscheibe, Dachscheibe oder Windschutzscheibe in eine Fahrzeugkarosserie. Dadurch wird ein harmonischer Gesamteindruck der Scheibe im Einbauzustand erzielt. Des Weiteren dient die opake Abdeckschicht als UV-Schutz für das verwendete Klebematerial.

Der opake Abdeckdruck ist eine Schicht, die die Durchsicht durch die Verbundscheibe verhindert. Dabei findet eine Transmission von höchstens 5 %, bevorzugt von höchstens 2 %, besonders bevorzugt von höchstens 1 %, insbesondere von höchstens 0,1 %, des Lichtes des sichtbaren Spektrums durch den opaken Abdeckdruck statt.

Der opake Abdeckdruck kann auf einer oder mehreren Scheibenoberflächen des Substrats und sofern vorhanden der zweiten Scheibe aufgebracht werden. Die innenraumseitige Oberfläche des Substrats ist insofern bevorzugt, dass der opake Abdeckdruck vor Witterungseinflüssen geschützt und das elektrische Anschlusselement und Sammelleiter kaschiert sind.

Das Substrat enthält oder besteht bevorzugt aus Glas, besonders bevorzugt Flachglas, Floatglas, Quarzglas, Borosilikatglas, Kalk-Natron-Glas oder Alumino-Silikat-Glas. Gleiches gilt für die zweite Scheibe.

Die Dicke des Substrats und der optional vorhandenen zweiten Scheibe (Außenscheibe und Innenscheibe) kann breit variieren und den Erfordernissen des Einzelfalls angepasst werden, wobei die Scheibendicke auch von der Verwendung der Scheibe als Innenscheibe oder Außenscheibe abhängt. Vorzugsweise werden Scheiben mit den Standardstärken von 0,5 mm bis 5 mm und bevorzugt von 1,0 mm bis 2,5 mm verwendet. Die Größe der Scheiben kann breit variieren und richtet sich nach der Verwendung.

Die Fahrzeugscheibe kann eine beliebige dreidimensionale Form aufweisen. Vorzugsweise haben die Außenscheibe und Innenscheibe keine Schattenzonen, so dass sie beispielsweise durch Kathodenzerstäubung beschichtet werden können. Bevorzugt sind die Außenscheibe und Innenscheibe leicht oder stark in eine Richtung oder in mehrere Richtungen des Raumes gebogen.

Die thermoplastische Zwischenschicht enthält oder besteht aus mindestens einem thermoplastischen Kunststoff, bevorzugt Polyvinylbutyral (PVB), Ethylenvinylacetat (EVA) und/oder Polyurethan (PU) oder Copolymere oder Derivate davon, gegebenenfalls in Kombination mit Polyethylenterephthalat (PET). Die thermoplastische Zwischenschicht kann aber auch beispielsweise Polypropylen (PP), Polyacrylat, Polyethylen (PE), Polycarbonat (PC), Polymethylmetacrylat, Polyvinylchlorid, Polyacetatharz, Gießharz, Acrylat, fluorinierte Ethylen-Propylen, Polyvinylfluorid und/oder Ethylen-Tetrafluorethylen, oder ein Copolymer oder Gemisch davon enthalten.

Die thermoplastische Zwischenschicht ist bevorzugt als mindestens eine thermoplastische Verbundfolie ausgebildet und enthält oder besteht aus Polyvinylbutyral (PVB), besonders bevorzugt aus Polyvinylbutyral (PVB) und dem Fachmann bekannte Additive wie beispielsweise Weichmacher. Bevorzugt enthält die thermoplastische Zwischenschicht mindestens einen Weichmacher.

Weichmacher sind chemische Verbindungen, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykole. Besonders bevorzugt werden als Weichmacher 3G7, 3G8 oder 4G7 eingesetzt, wobei die erste Ziffer die Anzahl der Ethlenglykoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

Bevorzugt enthält die thermoplastische Zwischenschicht auf Basis von PVB mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 35 Gew.-% eines Weichmachers. Der Weichmacher enthält oder besteht beispielsweise aus Triethylenglykolbis-(2-ethylhexanoat).

Die thermoplastische Zwischenschicht kann durch eine einzelne Folie ausgebildet sein oder auch durch mehr als eine Folie. Die thermoplastische Zwischenschicht kann durch eine oder mehrere übereinander angeordnete thermoplastische Folien ausgebildet werden, wobei die Dicke der thermoplastischen Zwischenschicht bevorzugt von 0,25 mm bis 1 mm beträgt, typischerweise 0,38 mm oder 0,76 mm.

Die thermoplastische Zwischenschicht kann auch eine funktionale thermoplastische Zwischenschicht sein, insbesondere eine Zwischenschicht mit akustisch dämpfenden Eigenschaften, eine Infrarotstrahlung reflektierende Zwischenschicht, eine Infrarotstrahlung absorbierende Zwischenschicht und/oder eine UV-Strahlung absorbierende Zwischenschicht. So kann die thermoplastische Zwischenschicht beispielsweise auch eine Bandfilterfolie sein, die schmale Bänder des sichtbaren Lichts ausblendet.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Figur 1a: eine Draufsicht auf eine Fahrzeugscheibe hergestellt im erfindungsgemäßen Verfahren,
- Figur 1b: einen Querschnitt durch die Fahrzeugscheibe der Figur 1a entlang der Schnittlinie CC',
- Figur 2a: eine Draufsicht auf eine weitere Ausgestaltung einer Fahrzeugscheibe als Verbundscheibe hergestellt im erfindungsgemäßen Verfahren,
- Figur 2b: einen Querschnitt durch die Fahrzeugscheibe der Figur 2a entlang der Schnittlinie EE',
- Figuren 3: ein Flussdiagramm einer Ausgestaltung des erfindungsgemäßen Verfahrens.

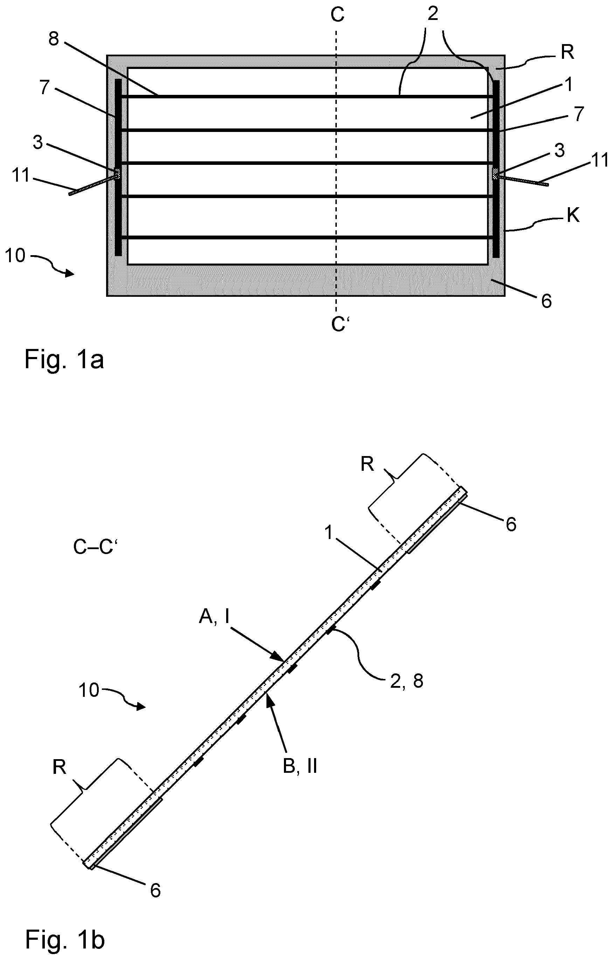

Figuren 1a und 1b zeigen eine Draufsicht auf eine im erfindungsgemäßen Verfahren hergestellte Fahrzeugscheibe 10 und eine Querschnittsansicht der Fahrzeugscheibe 10 entlang der Schnittlinie CC'. Die Fahrzeugscheibe 10 umfasst ein Substrat 1 mit einem umlaufenden Randbereich R, der in Nachbarschaft zur umlaufenden Kante K des Substrats 1 angeordnet ist. Die Fahrzeugscheibe 10 ist gebogen und stellt eine Fahrzeugheckscheibe dar. Das Substrat 1 weist eine erste Oberfläche A, die die außenseitige Oberfläche I der Fahrzeugscheibe bildet, und eine zweite Oberfläche B, die die innenraumseitige Oberfläche II der Fahrzeugscheibe darstellt, auf. Die außenseitige Oberfläche I ist im Einbauzustand der Fahrzeugscheibe 10 in einer Fahrzeugkarosserie der Umgebung zugewandt, während die innenraumseitige Oberfläche II im Einbauzustand zum Fahrzeuginnenraum hin orientiert ist. Im umlaufenden Randbereich R ist an der innenraumseitigen Oberfläche II ein opaker Abdeckdruck 6 aufgebracht. Entlang zweier gegenüberliegender Abschnitte der Kante K sind Sammelleiter 7 angebracht, die jeweils im Wesentlichen parallel zum benachbarten Kantenabschnitt verlaufen. Die Sammelleiter 7 sind auf dem opaken Abdeckdruck 6 aufgebracht, so dass dieser die Sammelleiter 7 in Durchsicht kaschiert. Zwischen den Sammelleitern 7 erstrecken sich Heizdrähte 8, die das Sichtfeld der Fahrzeugscheibe 10 überspannen. Die Sammelleiter 7 und die Heizdrähte 8 sind in Form einer elektrisch leitfähigen Sprühschicht 2 aus Silber im Kaltsprühverfahren auf das Substrat 1 aufgebracht. Im Sichtbereich der Fahrzeugscheibe 10 wurde dabei eine temporäre Maskierung verwendet um eine exakte Linienbreite der Heizdrähte 8 zu erzielen. Auf den Sammelleitern 7 sind elektrische Anschlusselemente 3 aufgelötet, an denen elektrische Zuleitungen 11 angeschlossen sind, über die eine Spannungsquelle mit der Anordnung verbunden werden kann.

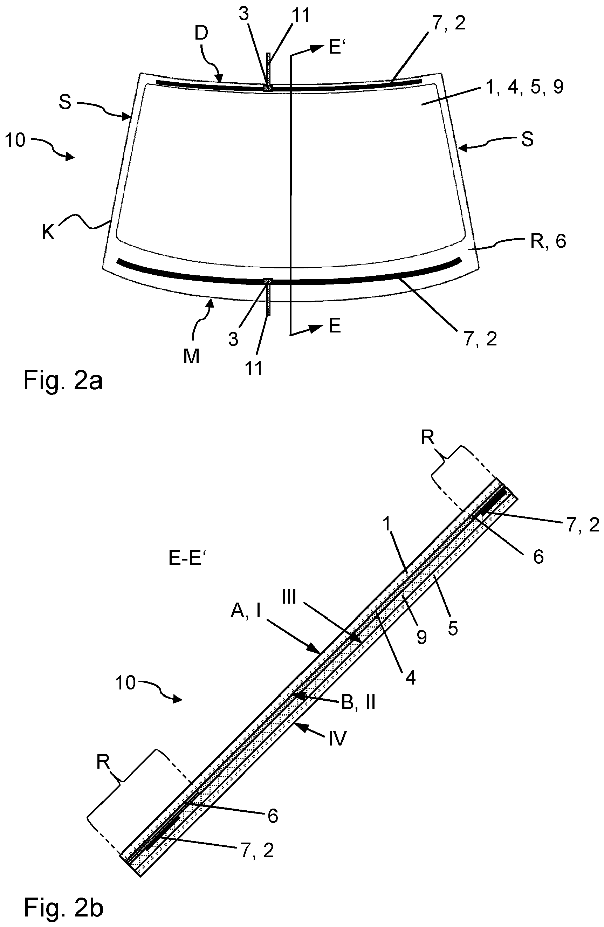

Figuren 2a und 2b zeigen eine Draufsicht und eine Querschnittansicht einer im erfindungsgemäßen Verfahren hergestellten Verbundscheibe als Fahrzeugscheibe 10. Die Fahrzeugscheibe 10 ist eine gebogene Windschutzscheibe. Die Querschnittansicht von Figur 2b entspricht der Schnittlinie EE' der Fahrzeugscheibe 10, wie in Figur 2a angedeutet ist.

Die Fahrzeugscheibe 10 als Windschutzscheibe ist eine Verbundscheibe umfassend ein Substrat 1 als Außenscheibe und eine zweite Scheibe 5 als Innenscheibe, die über eine thermoplastische Zwischenschicht 9 verbunden sind. Das Substrat 1 weist eine erste Oberfläche A, die die außenseitige Oberfläche I der Fahrzeugscheibe 10 darstellt, und eine zweite Oberfläche B, die die innenraumseitige Oberfläche II der Fahrzeugscheibe 10 darstellt, auf. Die zweite Scheibe 5 verfügt über eine außenraumseitige Oberfläche III und eine innenraumseitige Oberfläche IV. Die innenraumseitige Oberfläche II des Substrats 1 ist mit der außenraumseitigen Oberfläche III der zweiten Scheibe 5 über die thermoplastische Zwischenschicht 9 zu einer Verbundscheibe verbunden. Die außenseitige Oberfläche I des Substrats 1 ist von der thermoplastischen Zwischenschicht 9 abgewandt und ist gleichzeitig die Außenfläche der Verbundscheibe. Die innenraumseitige Oberfläche II des Substrats 1 sowie die außenseitige Oberfläche III der zweiten Scheibe 5 sind jeweils der Zwischenschicht 9 zugewandt. Die innenraumseitige Oberfläche IV der zweiten Scheibe 5 ist von der thermoplastischen Zwischenschicht 9 abgewandt und ist gleichzeitig die im Einbauzustand dem Fahrzeuginnenraum zugewandte Oberfläche der Verbundscheibe 10. Es versteht sich, dass die Verbundscheibe 10 jede beliebige geeignete geometrische Form und/oder Krümmung aufweisen kann. Als Verbundscheibe 10 weist sie typischer Weise eine konvexe Wölbung auf.

Das Substrat 1 und die zweite Scheibe 5 bestehen jeweils aus Glas, vorzugsweise thermisch vorgespanntem Kalk-Natron-Glas und sind für sichtbares Licht transparent. Die thermoplastische Zwischenschicht 3 umfasst einen thermoplastischen Kunststoff, vorzugsweise Polyvinylbutyral (PVB), Ethylenvinylacetat (EVA) und/oder Polyethylenterephthalat (PET).

Die Windschutzscheibe weist eine umlaufende Kante K auf, die sich in eine Motorkante M, eine Dachkante D und zwei Seitenkanten S gliedert. Als Motorkante M wird die Kante bezeichnet, die in Einbaulage der Windschutzscheibe in einer Fahrzeugkarosserie der Motorhaube benachbart ist. Der Motorkante M gegenüberliegend befindet sich die Dachkante, die im Einbauzustand an das Fahrzeugdach grenzt. Die Motorkante M und die Dachkante D werden verbunden durch zwei einander gegenüberliegende Seitenkanten S. Umlaufend benachbart zur umlaufenden Kante K befindet sich ein umlaufender Randbereich R, in dem auf der innenraumseitigen Oberfläche II des Substrats 1, ein rahmenförmiger umlaufender opaker Abdeckdruck 6 angebracht ist. Der Abdeckdruck 6 ist opak und verhindert die Sicht auf innenseitig der Fahrzeugscheibe 10 angeordnete Strukturen. Der opake Abdeckdruck 6 verhindert die Durchsicht durch die Fahrzeugscheibe 10, wodurch beispielsweise ein Klebestrang zum Einkleben der Fahrzeugscheibe 10 in eine Fahrzeugkarosserie von der Fahrzeugumgebung aus betrachtet nicht sichtbar ist. Die Breite des umlaufenden Randbereichs R ist variabel entlang der umlaufenden Kante K. Entlang der Motorkante M ist der Randbereich R mit darin befindlichem opaken Abdeckdruck 6 verbreitert.

Auf der innenraumseitigen Oberfläche II des Substrats 1 ist flächig eine elektrisch leitfähige Beschichtung 4 aufgebracht, die sich oberhalb dem opaken Abdeckdruck 6 befindet. Die elektrisch leitfähige Beschichtung 4 ist mittels physikalischer Gasphasenabscheidung aufgebracht. Im Randbereich R mit opakem Abdeckdruck 6 ist entlang der Motorkante M und der Dachkante D jeweils ein Sammelleiter 7 in Form einer elektrisch leitfähigen Sprühschicht 2 aufgebracht, der in Durchsicht durch die Scheibe vom opaken Abdeckdruck 6 kaschiert wird. Die Sammelleiter 7 sind elektrisch leitend mit der Beschichtung 4 verbunden. Auf den Sammelleitern 7 sind Anschlusselemente 3 mit elektrischer Zuleitung 11 aufgelötet, über die eine elektrische Spannung zwischen den Sammelleitern 7 angelegt werden kann, die einen Stromfluss über die Beschichtung 4 initiiert. Die Lamination des Substrats 1 und der zweiten Scheibe 5 erfolgt nach dem Aufbringen des elektrischen Anschlusselements 3.

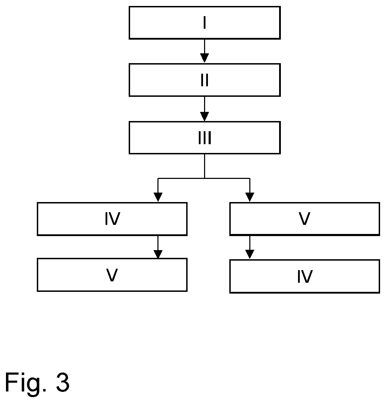

Figur 3 zeigt eine Ausführungsform des erfindungsgemäßen Verfahrens mindestens umfassend die Schritte:
I Bereitstellen eines flächigen Substrates 1 aus Glas mit einer ersten Oberfläche A und einer zweiten Oberfläche B,
II Biegen des flächigen Substrats 1 bei Temperaturen oberhalb von 400 °C und anschließendes Abkühlen des flächigen Substrats 1 auf eine Temperatur von unter 100 °C und optional Biegen einer zweiten Scheibe 5 kongruent und gemeinsam mit dem Substrat 1,
III Abscheidung wenigstens einer elektrisch leitfähigen Sprühschicht 2 umfassend ein Metall und/oder eine Metalllegierung mittels Kaltgasspritzen in mindestens einem Teilbereich der ersten Oberfläche A und/oder der zweiten Oberfläche B des Substrats 1,
IV Aufbringen mindestens eines elektrischen Anschlusselementes 3 auf der Sprühschicht 2 und elektrisch leitfähiges Verbinden des elektrischen Anschlusselementes 3 mit der Sprühschicht 2
V optional, nur sofern eine zweite Scheibe 5 vorhanden ist: Laminieren des flächigen Substrats 1 mit der zweiten Scheibe 5 unter Zwischenlage einer thermoplastischen Zwischenschicht.

Ist die Oberfläche, an der das Anschlusselement angeordnet wird, eine Oberfläche, die an die thermoplastische Zwischenschicht grenzt, so erfolgt Schritt IV vor Schritt V. Ist das Anschlusselement an einer der thermoplastischen Zwischenschicht abgewandten Oberfläche des Substrats angeordnet, so können die Schritte IV und V in beliebiger Reihenfolge erfolgen. Umfasst die Fahrzeugscheibe 10 keine zweite Scheibe 5, so entfällt Schritt V.

### Bezugszeichenliste

- 10: Fahrzeugscheibe
- 1: Substrat
- 2: elektrisch leitfähige Sprühschicht
- 3: elektrisches Anschlusselement
- 4: elektrisch leitfähige Beschichtung
- 5: zweite Scheibe
- 6: opaker Abdeckdruck
- 7: Sammelleiter
- 8: Heizleiter
- 9: thermoplastische Zwischenschicht
- 11: Zuleitung

- R: Randbereich
- K: umlaufende Kante
- M: Motorkante
- D: Dachkante
- S: Seitenkanten

- I: außenseitige Oberfläche der Außenscheibe 1
- II: innenraumseitige Oberfläche der Außenscheibe 1
- III: außenseitige Oberfläche der Innenscheibe 2
- IV: innenraumseitige Oberfläche der Innenscheibe 2

- CC': Schnittlinie
- EE': Schnittlinie

## Patentansprüche

1. Verfahren zur Herstellung einer Fahrzeugscheibe (10) mindestens umfassend in dieser Reihenfolge die Schritte
a) Bereitstellen eines flächigen Substrates (1) aus Glas mit einer ersten Oberfläche (A) und einer zweiten Oberfläche (B),
b) Biegen des flächigen Substrats (1) bei Temperaturen oberhalb von 400 °C und anschließendes Abkühlen des flächigen Substrats (1) auf eine Temperatur von unter 100 °C,
c) Abscheidung wenigstens einer elektrisch leitfähigen Sprühschicht (2) umfassend ein Metall und/oder eine Metalllegierung mittels Kaltgasspritzen in mindestens einem Teilbereich der ersten Oberfläche (A) und/oder der zweiten Oberfläche (B) des Substrats (1),
d) Aufbringen mindestens eines elektrischen Anschlusselementes (3) auf der Sprühschicht (2) und elektrisch leitfähiges Verbinden des elektrischen Anschlusselementes (3) mit der Sprühschicht (2).

2. Verfahren nach Anspruch 1, wobei die elektrisch leitfähige Sprühschicht (2) Magnesium, Aluminium, Titan, Nickel, Kupfer, Tantal, Niob, Silber, Gold, Eisen, Platin, Zirkonium, Molybdän, Chrom, Zinn, Zink und/oder Legierungen oder Gemische davon, bevorzugt Aluminium, Zinn, Kupfer, Silber und/oder Legierungen oder Gemische davon enthält.

3. Verfahren nach Anspruch 1 oder 2, wobei die elektrisch leitfähige Sprühschicht (2) eine Dicke von 10 µm bis 200 µm, bevorzugt 50 µm bis 150 µm, aufweist.

4. Verfahren nach einem der Ansprüche 1 bis 3, wobei die elektrisch leitfähige Sprühschicht (2) in einer Linienbreite von 0,5 mm bis 100 mm, bevorzugt 1 mm bis 50 mm, aufgetragen wird.

5. Verfahren nach einem der Ansprüche 1 bis 4, wobei das Substrat (1) während Schritt c) auf einer Halterung aufliegt.

6. Verfahren nach einem der Ansprüche 1 bis 5, wobei während Schritt c) Teilbereiche der ersten Oberfläche (A) und/oder der zweiten Oberfläche (B) mittels Maskierungsstreifen abgedeckt werden.

7. Verfahren nach einem der Ansprüche 1 bis 6, wobei das Substrat (1) in Schritt a) mit einer elektrisch leitfähigen Beschichtung (4) auf der ersten Oberfläche (A) und/oder auf der zweiten Oberfläche (B) bereitgestellt wird und die elektrisch leitfähige Sprühschicht (2) in Schritt c) auf der dem Substrat (1) abgewandten Oberfläche der elektrisch leitfähigen Beschichtung (4) abgeschieden wird.

8. Verfahren nach Anspruch 7, wobei die elektrisch leitfähige Beschichtung (4) mindestens eine funktionelle Schicht auf Basis von Silber, bevorzugt mehrere funktionelle Schichten auf Basis von Silber umfasst, wobei die funktionellen Schichten auf Basis von Silber durch zwischen diesen angeordnete dielektrische Schichten voneinander getrennt sind.

9. Verfahren nach Anspruch 7 oder 8, wobei die elektrisch leitfähige Beschichtung (4) mittels chemischer oder physikalischer Gasphasenabscheidung auf dem Substrat (1) abgeschieden wird.

10. Verfahren nach einem der Ansprüche 1 bis 9, wobei die elektrisch leitfähige Sprühschicht (2) eine elektrische Leitfähigkeit von mindestens 10⁻⁷ S/cm aufweist.

11. Verfahren nach einem der Ansprüche 1 bis 10, wobei in Schritt d) mindestens ein elektrisches Anschlusselement (3) auf die Sprühschicht (2) aufgelötet wird.

12. Verfahren nach einem der Ansprüche 1 bis 11, wobei das Substrat (1) nach Schritt c) und vor oder nach Schritt d) mit einer zweiten Scheibe (5) unter Zwischenlage einer thermoplastischen Zwischenschicht (6) zu einer Verbundscheibe laminiert wird.

13. Verfahren nach Anspruch 12, wobei die zweite Scheibe (5) in Schritt b) gemeinsam mit dem Substrat kongruent gebogen wird.
